**Europäisches Patentamt**

**European Patent Office**

**Office européen des brevets**

(11) Veröffentlichungsnummer: **0 383 927**
**A1**

## EUROPÄISCHE PATENTANMELDUNG
### veröffentlicht nach Art. 158 Abs. 3
### EPÜ

Anmeldenummer: 89906493.5

(51) Int. Cl.⁵ **C02F 1/461**

Anmeldetag: 19.05.89

Internationale Anmeldenummer:
PCT/SU89/00124

Internationale Veröffentlichungsnummer:
WO 89/11453 (30.11.89 89/28)

(30) Priorität: **19.05.88 SU 4420088**

(43) Veröffentlichungstag der Anmeldung:
**29.08.90 Patentblatt 90/35**

(84) Benannte Vertragsstaaten:
**AT DE FR GB**

(71) Anmelder: **INSTITUT GORNOGO DELA SIBIRSKOGO OTDELENIA AKADEMII NAUK SSSR**
**Krasny pr., 54**
**Novosibirsk, 630091(SU)**

(72) Erfinder: **BOCHKAREV, Gely Romanovich**
**Krasny pr., 56-26**
**Novosibirsk, 630091(SU)**
Erfinder: **BELOBORODOV, Alexandr Vasilievich**
**ul. B.Bogatkova, 228-133**
**Novosibirsk, 630017(SU)**
Erfinder: **PUSHKAREVA, Galina Ivanovna**
**Krasny pr., 90-35**
**Novosibirsk, 630105(SU)**

(74) Vertreter: **Patentanwälte Beetz sen. - Beetz jun. Timpe - Siegfried - Schmitt-Fumian-Mayr**
**Steinsdorfstrasse 10**
**D-8000 München 22(DE)**

(54) **VERFAHREN ZUM WEICHMACHEN VON WASSER SOWIE ELEKTROLYSIERVORRICHTUNG.**

(57) Die Erfindung betrifft die Wasseraufbereitung. Das Verfahren zur Wasserenthärtung durch elektrochemische Behandlung des Wassers besteht darin, dass das Wasser in zwei Strömen durch die Anodenkammer und die Katodenkammer eines Scheidewand-Elektrolyseurs geleitet wird. Gemäss der Erfindung wird der Wasserstrom vor der Zuleitung in die Anodenkammer vorenthärtet, weshalb dieser Strom aus Katolyt nach der Absonderung der als Niederschlag aus ihm ausgefallenen Härtesalze gebildet wird und man als Fertigprodukt das Anolyt verwendet. Der Elektrolyseur zur Wasserenthärtung enthält ein Gehäuse (1), das durch poröse Scheidewände (2) in zwei Anodenkammern und einer Katodenkammer (3 bzw. 4) unterteilt ist. Gemäss der Erfindung sind die Anoden (5) in einer Entfernung (d) von der porösen Scheidewand (2) angebracht, die Lochungen in der Katode (6) haben die Form von Schlitzen (8), die etwa rechtwinklig zur Fliessrichtung des Wasserstroms orientiert sind, und auf der ins Innere der Katodenkammer (4) gerichteten Oberfläche der Katode (6) sind in den Zwischenräumen
zwischen den Schlitzen (8) Vorsprünge (9) angebracht, deren in Fliessrichtung des Stroms ersten
Oberflächen zur Oberfläche der porösen Scheidewand (2) unter einem Winkel von 20 bis 40° geneigt
sind.

Die Erfindung kann überall dort angewendet werden, wo Wasser enthärtet werden muss.

FIG. 1

# VERFAHREN ZUR WASSERENTHÄRTUNG UND ELEKTROLYSEUR ZUR REALISIERUNG DIESES VERFAHRENS

## Gebiet der Technik

Die Erfindung bezieht sich auf die Wasseraufbereitung und betrifft ein Verfahren zur Wasserenthärtung durch elektrochemische Behandlung des Wassers und einen Elektrolyseur zur Realisierung dieses Verfahrens.

## Zugrundeliegender Stand der Technik

Es ist ein Verfahren zur Wasserenthärtung durch Zugabe chemischer Reaktanten, z. B., Kalk in Form von Kalkmilch in das zu enthärtende Wasser bekannt. Dabei gehen die Härtesalze in eine unlösliche Form über und werden als Niederschlag aus dem zu enthärtenden Wasser durch Absetzen oder Filtrieren abgesondert (siehe, z. B., "Baunormen und -regeln. Wasserversorgung Aussennetze und -anlagen", SNiB 2.04.84, 1985, Moskau, S. 108 bis 109). Nach dem bekannten Verfahren lässt sich jedoch das Wasser nicht in ausreichendem Grad enthärten. Nur durch den Einsatz zusätzlicher Mittel, und zwar durch Zugabe von Soda und Erwärmen des Wassers auf 35 bis 40°C lässt sich die Resthärte bis auf 0,5 bis 1,0 mval/l senken. Ausserdem sind bei dem bekannten Verfahren Anlagen zur Lagerung und Aufbereitung der Reaktanten, Mischer, Kläreinrichtung zur Endaufbereitung des Wassers und der Koagulationsmittel notwendig. Das bedeutet, dass das Verfahren zur Wasserenthärtung bei Verwendung chemischer Reaktanten für seine Realisierung eine komplizierte Anlage benötigt, die eine grosse Anzahl einzelner Vorrichtungen enthält.

Ausserdem ist ein Verfahren zur Wasserenthärtung durch elektrochemische Behandlung des Wassers bekannt, das darin besteht, dass das Wasser in zwei Strömen durch einen Elektrolyseur mit poröser Scheidewand geleitet wird, und zwar ein Strom durch die Anodenkammer, wobei Anolyt anfällt, und der andere Strom – durch die Katodenkammer, wobei man Katolyt bekommt, aus dem die als Niederschlag ausgefallenen Härtesalze abgesondert werden, danach bringt man Katolyt und Anolyt zusammen und verwendet den vereinigten Strom als Fertigprodukt (siehe z. B. die Zeitschrift "Wodosnabzhenije i sanitarnaja technika", Nr. 4, 1982, S. 7 bis 8). Nach dem bekannten Verfahren kann man jedoch die Härte des Wassers nur bis auf 0,8 bis 1,2 mval/l senken. Das bedeutet, dass dieses Verfahren eigentlich nur ein Verfahren zur Vorreinigung des Wassers vor der Wasserenthärtung nach dem Natrium-Kationenaustauschverfahren ist, bei dem das zu enthärtende Wasser nach seiner Behandlung in einem Scheidewand-Elektrolyseur in einen Ionenaustauschapparat geleitet wird, wo es nach dem Natrium-Kationenaustauschverfahren behandelt wird.

Bei der Durchführung des bekannten Verfahrens benötigt man chemisch reine Stoffe NaCl und HCl, wodurch das Verfahren wesentlich teurer wird. Ausserdem ist bei diesem Verfahren der Verbrauch des zu reinigenden Wassers zum Abschlämmen sehr hoch. In der Regel wird dieses Verfahren zur Enthärtung von Wasser mit geringer Härte verwendet.

Es ist ein Elektrolyseur zur Wasserenthärtung bekannt, der ein Gehäuse enthält, das durch eine poröse Scheidewand in Durchflusskammern unterteilt ist - in eine Anodenkammer mit einer Anode und eine Katodenkammer mit einer Katode. Die Anode und die Katode sind als Platten ausgeführt, werden von verschiedenen Seiten an die Scheidewand angedrückt und von ihr jeweils durch eine elektrische Isolierschicht getrennt. Dabei sind in der Anode, der Katode und in den elektrischen Isolierschichten Lochungen ausgeführt (SU, A, 882944).

Der bekannte Elektrolyseur ist jedoch durch eine niedrige Qualität der Reinigung in der Anodenkammer gekennzeichnet, da die Anode den Übergang der Kationen aus der Anodenkammer in die Katodenkammer verhindert, die positiv geladenen Ionen werden von der Anode abgestossen. Das bedeutet, dass die Elektrolyseure von diesem Typ im wesentlichen die Rolle von Elektrokoagulatoren des pH-Werts spielen. Ausserdem erfordert die Herstellung und Montage dieses Elektrolyseurs eine hohe Genauigkeit bei der Ausführung der koaxialen Lochungen, da sich die Lochungen bei einer Verschiebung gegenseitig überdecken und dadurch die Arbeitsfläche der Scheidewand kleiner wird.

Im Innern der Lochungen läuft die Elektrolyse am intensivsten infolge des minimalen elektrischen Widerstand ab, was besonders wesentlich bei erheblicher Dicke der Elektroden ist, z. B., bei Verwendung von Graphitelektroden. Das führt jedoch zum Verschlammen der Scheidewand mit Elektrolyseprodukten um die Lochungen herum, wodurch die Zuverlässigkeit der Funktion des Elektrolyseurs beeinträchtigt wird.

Offenbarung der Erfindung

Der Erfindung liegt die Aufgabe zugrunde, ein Verfahren zur Wasserenthärtung durch elektrochemische Behandlung des Wassers mit solch einer Aufeinanderfolge der Stadien der Behandlung des Wassers zu entwicheln, die es ermöglicht, Wasser mit einer Härte von 0,2 bis 0,3 mval/1 in einer Enthärtungsstufe ohne Heranziehung zusätzlicher Mittel zu bekommen, und ausserdem einen Elektrolyseur zur Realisierung dieses Verfahrens zu schaffen, in dem die Katode eine solche Konstruktion hat, die das Verschlammen der Lochungen in der Katode während der elektrochemischen Wasserenthärtung wesentlich verringert, wodurch im Ergebnis die Qualität der Wasserenthärtung besser wird.

·Diese Aufgabe wird dadurch gelöst, dass in einem Verfahren zur Wasserenthärtung durch elektrochemische Behandlung des Wassers, das darin besteht, dass das Wasser in zwei Strömen durch einen Scheidewand-Elektrolyseur geleitet wird, und zwar ein Strom durch die Anodenkammer, wobei Anolyt anfällt, und den zweiten Strom durch die Katodenkammer, wobei man Katolyt bekommt, aus dem die als Niederschlag ausgefallenen Härtesalze abgesondert werden, gemäss der Erfindung der Wasserstrom, bevor er in die Anodenkammer kommt, einer Vorenthärtung unterzogen wird, wobei dieser Strom aus wenigstens einem Teil des Katolytstroms nach dem Absondern des Niederschlags der Härtesalze aus ihm besteht und das Anolyt das Fertigprodukt darstellt.

Die Aufgabe wird auch dadurch gelöss, dass in einem Elektrolyseur zur Wasserenthärtung, der ein Gehäuse enthält, das durch eine poröse Scheidewand in Durchflusskammern unterteilt ist - in eine Anodenkammer mit einer Anode und eine Katodenkammer mit einer Katode, die an die poröse Scheidewand angedrückt wird, wobei zwischen ihnen eine elektrische Isolierschicht liegt und sowohl in der elektrischen Isolierschicht, als auch in der Katode Lochungen ausgeführt sind, gemäss der Erfindung die Anode in einiger Entfernung von der porösen Scheidewand angebracht ist, die Lochungen in der Katode und in der elektrischen Isolierschicht die Form von Schlitzen haben, die etwa rechtwinklig zur Fliessrichtung des Wasserstroms orientiert sind, und auf der ins Innere der Katodenkammer gerichteten Oberfläche der Katode in den Zwischenräumen zwischen den Schlitzen und längs zu ihnen langgestreckte Vorsprünge angebracht sind, von denen die in Fliessrichtung des Stroms ersten Oberflächen zur Oberfläche der porösen Scheidewand unter einem Winkel von 20 bis 40° geneigt sind.

Es ist zweckmässig zur Vergrösserung der Arbeitsfläche der Scheidewand im Körper der Vorsprünge durchgehende Öffnungen auszuführen, deren Achsen rechtwinklig zur Oberfläche der Scheidewand verlaufen.

Das nach der vorliegenden Erfindung durchgeführte Verfahren zur Wasserenthärtung durch elektrochemische Behandlung des Wassers ermöglicht bei der Aufbereitung von Wasser eine Härte von 0,2 bis 0,3 mval/l in einem Behandlungsstadium ohne Hinzuziehung zusätzlicher Mit- tel zur Behandlung des Wassers, z. B., des Natrium- -Kationenaustauschverfahrens zu erzielen. Das Verfahren ist technologisch einfach und in hohem Grad zuverlässig.

Der nach der vorliegenden Erfindung ausgeführte und zur Realisierung des erfindungsgemässen Verfahrens verwendete Elektrolyseur zur Wasserenthärtung ist einfach in der Konstruktion, besitzt eine hohe Leistung und ist zuverlässig im Betrieb. Durch die Anordnung der Anode in einiger Entfernung von der porösen Scheidewand können die Kationen aus der Anodenkammer widerstandslos durch die poröse Scheidewand in die Katodenkammer wandern, wo die Vorenthärtung des Wasserstroms bei dessen Durchfliessen durch die Katodenkammer erfolgt. Die Ausführung der Lochungen als Schlitze und der zwischen ihnen gelegenen Vorsprünge mit geneigten, stromlinienförmigen Oberflächen in Fliessrichtung des Stroms fördert ein intensives Wegspülen der Elektrolyseprodukte von der Oberfläche der porösen Scheidewand infolge einer Verbesserung der hydrodynamischen Verhältnisse für den Strom in der Umgebung der Lochungen. Die Ausführung durchgehender Öffnungen im Körper der Vorsprünge erhöht die Arbeitsfläche der porösen Scheidewand und folglich die Leistung des Elektrolyseurs.

Kurze Beschreibung der Zeichnungen

Im folgenden wird die Erfindung durch eine konkrete Ausführungsvariante und die beiliegenden Zeichnungen erläutert, und zwar zeigt:

Fig. 1 schematisch einen erfindungsgemässen Elektrolyseur zur Wasserenthärtung im Längsschnitt;

Fig. 2 einen Schnitt gemäss der Linie II-II in Fig. 1;

Fig. 3 einen Schnitt gemäss der Linie III-III in Fig. 1;

Fig. 4 das Schema einer Anlage zur Realisierung des erfindungsgemässen Verfahrens zur Wasserenthärtung.

Beste Ausführungsvariante der Erfindung

Das Wesen des Verfahrens zur Wasserenthärtung besteht in folgendem. Das zu enthärtende Wasser wird

EP 0 383 927 A1

- 6 -

in zwei Strömen durch einen Scheidewand-Elektrolyseur geleitet - ein Strom durch die Anodenkammer, wobei Anolyt anfällt, und der zweite Strom durch die Katodenkammer, wobei man Katolyt bekommt, aus dem die als Niederschlag ausgefallenen Härtesalze abgesondert werden. Der in die Anodenkammer geleitete Strom wird dabei vorenthärtet, wobei dieser Strom aus wenigstens einem Teil des Katolytstroms nach der Absonderung des Niederschlags der Hätesalze aus ihm besteht und das Anolyt als Fertigprodukt verwendet wird.

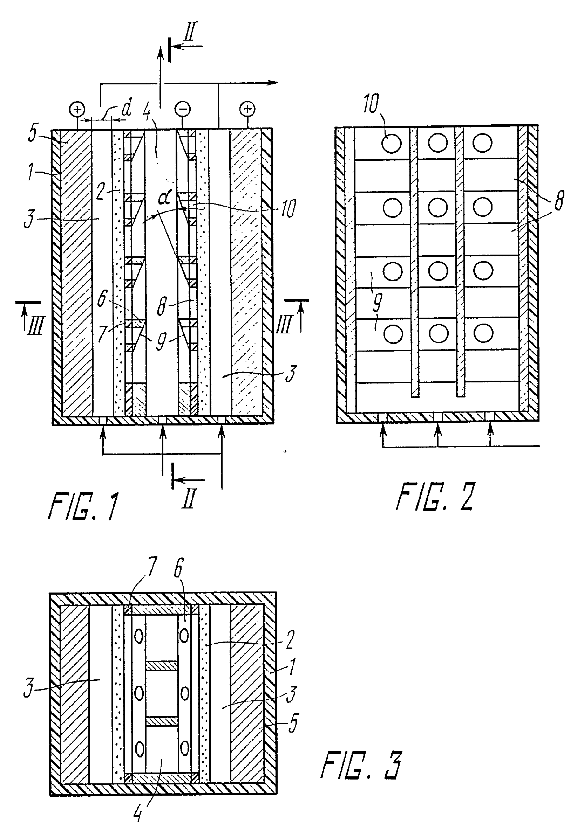

Das erfindungsgemässe Verfahren zur Wasserenthärtung ist mit Hilfes des in den Fig. 1,2,3 abgebildeten Elektrolyseurs zur Wasserenthärtung realisiert worden.

Der Elektrolyseur zur Wasserenthärtung enthält ein rechteckiges, dielektrisches Gehäuse 1, das durch zwei parallel zueinander angeordnete poröse Scheidewände 2 in drei Durchflusskammern unterteilt ist - in zwei am Rand liegende Anodenkammern 3 und eine zwischen ihnen befindliche mittlere Katodenkammer 4. In jeder Anodenkammer 3 befindet sich eine Anode 5, die eine Platte aus einem elektrisch leitenden Stoff darstellt und in der Entfernung d von der porösen Scheidewand 2 aufgestellt ist. Die Katode 6 hat Kastenform entsprechend der Form der Katodenkammer 4 und wird mit zwei ihrer gegenüberliegenden Wände an die poröse Scheidewand 2 angedrückt, wobei jeweils zwischen der Wand und der entsprechenden porösen Scheidewand 2 sich eine elektrische Isolierschicht 7 befindet. In den elektrischen Isolierschichten 7 und den an sie anliegenden Wänden der Katode 6 sind Lochungen 8 in Form von Schlitzen (im folgenden Schlitze 8) ausgeführt, die etwa rechtwinklig zur Fliessrichtung des Wasserstroms durch die Katodenkammer 4 orientiert, sind. In den Zwischenräumen zwischen den Schlitzen 8 sind auf der ins Innere der Katodenkammer 4 gerichteten Oberfläche der Katode 6 längs zu den Schlitzen 8 langgestreckte Vorsprünge 9 angebracht, von denen die in Fliessrichtung des Stroms ersten Oberflächen zur Oberfläche der porösen Scheidewand 2 unter einem Winkel $\alpha$ = 20 bis 40° geneigt sind. Der Körper der Vorsprünge 9 hat durchgehende Öffnungen 10, deren Achsen rechtwinklig zur Oberfläche der porösen Scheidewand 2 verlaufen. Ausserdem hat die Katode 6 Versteifungsrippen 11.

Der in Fig. 1,2,3 abgebildete Elektrolyseur funktioniert folgendermassen. Das zu enthärtende Wasser wird durch den Elektrolyseur in drei Strömen geleitet - einem mittleren Strom durch die Katodenkammer 4 und zwei seitlichen Strömen jeweils durch eine der Anodenkammern 3.

An die Elektroden, d.h., an die Anoden 5 und die Katode 6 wird ein Gleichstrom angelegt (die Stromquelle ist nicht abgebildet). Unter Einwirkung des Gleichstroms wandern die die Härte des Wassers hervorrufenden Kalzium- und Magnesiumionen aus den Anodenkammern 3 in die Katodenkammer 4 durch die porösen Scheidewände 2, die, z. B., aus einem Beltinggewebe bestehen, und die als Schlitze 8 in der Katode 6 und in den Isolierschichten 7 ausgeführten Lochungen. Auf diese Weise wird das Anolyt enthärtet. In der Katodenkammer 4 vollzieht sich infolge der Elektrolyse eine Alkalisierung des Katolyts bis zu pH = 10,5 bis 11,5. Die Kalzium- und Magnesiumionen gehen bei diesem pH-Wert in eine unlösliche Form von Hydroxiden oder Karbonaten über. Die Elektrolyse des Wassers erfolgt dabei nur an der Innenfläche der Katode 6, da ihre an die poröse Scheidewand 2 angedrückte Aussenfläche durch die elektrischen Isolierschichten 7 geschützt ist. Deshalb kommt es nicht zum Verschlammen der porösen Scheidewand 2 durch Elektrolyseprodukte auf den zur porösen Scheidewand 2 gerichteten Flächen der Katode 6.

Die Ausführung von Vorsprüngen 9 auf der Innenfläche der Katode 6 in den Zwischenräumen zwischen den Schlitzen 8, von denen die in Fliessrichtung des Stroms ersten Oberflächen zur Oberfläche der porösen Scheidewand 2 unter einem Winkel = 20 bis 40° geneigt sind, ermöglichte die Schaffung solcher hydrodynamischer Verhältnisse für den Strom, dass in den Schlitzen 8 der Katode 6 keine Stillstandszonen entstehen und die Elektrolyseprodukte, und zwar der Niederschlag der Härtesalze und die Gasbläschen leicht durch den Strom von der Oberfläche der porösen Scheidewand 2 weggetragen werden. Der Neigungswinkel $\alpha$ der Oberfläche der Vorsprünge 9 zur Oberfläche der porösen Scheidewand 2 ist experimentell ermittelt werden. Wenn der Neigungswinkel $\alpha$ grösser als 40° ist, werden die Elektrolyseprodukte nicht restlos entfernt, während bei einem Winkel $\alpha < 20°$ die Nutzfläche der porösen Scheidewände 2 in starkem Mass überdeckt (verringert) wird, d. h., sie wird nicht effektiv genutzt.

Die Ausführung im Körper der Vorsprünge 9 durchgehender Öffnungen 10, deren Achsen rechtwinklig zur Oberfläche der porösen Scheidewande 2 verlaufen , ermöglicht es, die Arbeitsfläche der porösen Scheidewände 2 und folglich die Leistung des Elektrolyseurs zu vergrössern.

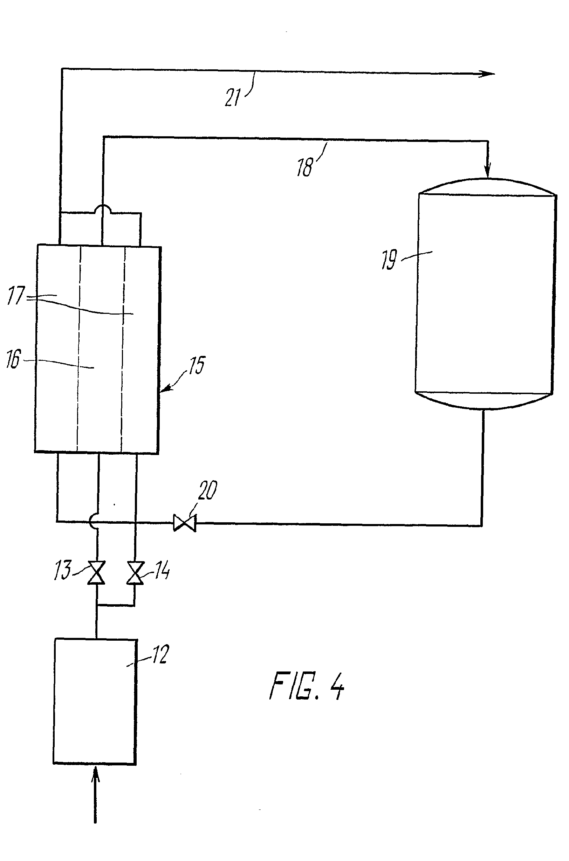

Das erfindungsgemässe Verfahren zur Wasserenthärtung ist in einer in Fig. 4 abgebildeten Anlage realisiert worden.

Die Anlage enthält eine Erwärmungseinrichtung 12 für Wasser, deren Eingang mit der Hauptleitung für das zu enthärtende Wasser verbunden ist und deren Ausgang über zwei mit Ventilen 13 bzw. 14 ausgerüstete Rohrleitungen mit dem Elektrolyseur 15 zur Wasserenthärtung in Verbindung steht, der eine Katodenkammer 16 und zwei Anodenkammern 17 enthält. Mit ihren Eingängen ist die Katodenkammer 16 und die Anodenkammern 17 mit dem Ausgang der Erwärmungseinrichtung 12 über die Ventile 13 bzw. 14 verbunden, der Ausgang der Katodenkammer 16 ist durch eine Rohrleitung 18 mit dem Eingang eines Filters 19 verbunden, der mit seinem Ausgang über ein Ventil 20 an die Eingänge der Anodenkammern 17 angeschlossen ist. Die Ausgänge der Anodenkammern 17 sind mit einer Rohrleitung für das Fertigprodukt verbunden.

Das Wasser aus der Erwärmungseinrichtung 12 wird in zwei Strömen durch die offenen Ventile 13 und 14 in den Elektrolyseur 15 gemäss der Erfindung in die Katodenkammer 16 und die zwei Anodenkammern 17 geleitet. Dabei ist das Ventil 20 geschlossen. Aus der Katodenkammer 16 gelangt das Wasser durch die Rohrleitung 18 auf den Filter 19. Danach schliesst man das Ventil 14, öffnet das Ventil 20, und das enthärtete Katolyt wird nach der Absonderung des Niederschlags der Härtesalze im Filter 19 vom Ausgang des Filters 19 durch das Ventil 20 in die Anodenkammer 17 zur endgültigen Enthärtung geleitet, während in die Katodenkammer 16 weiter das Ausgangswasser (nicht enthärtet) von der Erwärmungseinrichtung 12 durch das offene Ventil 13 strömt. Die Härte des Katolyts nach dem Absondern des Niederschlags im Filter 19 beträgt 2,6 bis 3,9 mval/l. Das in die Rohrleitung 21 gelangende Anolyt, das das Fertigprodukt darstellt, hat eine Härte von nicht mehr als 0,2 bis 0,3 mval/l.

Zum besseren Verständnis des Wesens der vorliegenden Erfindung werden im folgenden konkrete Durchführungsbeispiele des erfindungsgemässen Verfahrens zur Wasserenthärtung angeführt.

Beispiel 1

Wasser mit einer Härte von 6,6 mval/l wurde in drei Strömen in den Elektrolyseur 15 gegeben - zwei Ströme in die Anodenkammern 17, wobei man am Ausgang Anolyt bekam, und der dritte Strom in die Katodenkammer 16, an deren Ausgang Katolyt anfiel, aus dem durch Filtrieren die als Niederschlag ausgefallenen Härtesalze abgesondert wurden. Nach dem Absondern der Härtesalze betrug der pH-Wert des Katolyts 11,3 und die Härte des Katolyts - 3,9 mval/l. Danach wurde die Wasserzufuhr in die Anodenkammern 17 beendet, während in die Katodenkammer 16 weiter das Ausgangswasser mit einer Härte von 6,6 mval/l geleitet wurde. In den Anodenkammern 17 wurde das Katolyt einer endgültigen Reinigung unterworfen, und am Ausgang aus den Anodenkammern 17 betrug danach die

Härte des Anolyts (des Endprodukts) 0,3 mval/l bei pH = 6 bis 7.

Beispiel 2

Die Enthärtung des Ausgangswassers wurde ähnlich wie im Beispiel 1 vorgenommen, jedoch mit dem Unterschied, dass das Ausgangswasser vor der Zuleitung in die Katodenkammer 16 in der Erwärmungseinrichtung 12 auf 40°C erwärmt wurde. Dadurch verringerte sich die Härte des Fertigprodukts (des Anolyts) bis auf 0,2 mval/l, der Elektroenergieverbrauch für die Wasserenthärtung ging um 20 bis 30% zurück.

Beispiel 3 (zum Vergleich nach einem bekannten Verfahren durchgeführt).

Die Bedingungen der elektrochemischen Wasserenthärtung waren ähnlich wie im Beispiel 1, das Katolyt wurde jedoch nach dem Absondern der Härtesalze nicht in die Anodenkammern 17 zur Endreinigung geleitet, sondern mit dem Anolyt vermischt und als Endprodukt verwendet.

Die Härte des Katolyts betrug 0,55 mval/l, die Härte des Anolyts - 2,1 mval/l, die Härte des vereinigten Stroms (des Fertigprodukts) betrug

$$\frac{0,55 + 2,1}{2} = 1,325 \text{ mval/l} .$$

Bei Verwendung von vorenthärtetem Wasser, und zwar von Katolyt als Strom, der in die Anodenkammern geleitet wird, kann man folglich in einem Behandlungsstadium Wasser mit einer Härte von 0,2 bis 0,3 mval/l bekommen. Der kleinere Wert wird beim Erwärmen des Ausgangswassers auf 40°C erzielt, wozu keine zusätzliche Energie erforderlich ist, da das Industriewasser in der Regel schon bis auf 40 bis 60°C erwärmt zur Enthärtung eintrifft.

Gewerbliche Anwendbarkeit

Die vorliegende Erfindung kann eine weite Verbreitung im Energiewesen, in der pharmazeutischen Industrie, in der Chemie und auf anderen Gebieten finden, wo Wasser enthärtet werden muss.

PATENTANSPRÜCHE

1. Verfahren zur Wasserenthärtung durch elektrochemische Behandlung des Wassers, das darin besteht,
dass das Wasser im zwei Strömen durch einen Scheidewand-
-Elektrolyseur (15) geleitet wird, und zwar ein Strom
durch die Anodenkammer (17), wobei Anolyt anfällt, und
der zweite Strom durch die Katodenkammer (16), wobei
man Katolyt bekommt, aus dem die als Niederschlag ausgefallenen Härtesalze abgesondert werden, dadurch g e -
k e n n z e i c h n e t , dass der Wasserstrom, bevor
er in die Anodenkammer (17) kommt, einer Vorenthärtung
unterzogen wird, wobei dieser Strom aus wenigstens
einem Teil des Katolytstroms nach dem Absondern des
Niederschlags der Härtesalze aus ihm besteht und das
Anolyt als Fertigprodukt verwendet wird.

2. Elektrolyseur zur Wasserenthärtung, der ein
Gehäuse (1) enthält, das durch eine poröse Scheidewand (2) in Durchflusskammern (3,4) unterteilt ist -
in eine Anodenkammer mit einer Anode (5) und in eine
Katodenkammer mit einer Katode (6), die an die poröse
Scheidewand (2) angedrückt wird, wobei zwischen ihnen
eine elektrische Isolierschicht (7) liegt und sowohl
in der elektrischen Isolierschicht (7), als auch in der
Katode (6) Lochungen ausgeführt sind, dadurch g e -
k e n n z e i c h n e t , dass die Anode (5) in einiger
Entfernung  d  von der porösen Scheidewand (2) angebracht ist, die Lochungen in der Katode (6) und in der
elektrischen Isolierschicht (7) die Form von Schlitzen (8) haben, die etwa rechtwinklig zur Fliessrichtung
des Wasserstroms orientiert sind, und auf der ins Innere der Katodenkammer (4) gerichteten Oberfläche der
Katode (6) in den Zwischenräumen zwischen den Schlitzen (8) und längs zu ihnen langgestreckte Vorsprünge (9)
angebracht sind, von denen die in Fliessrichtung des
Stroms ersten Oberflächen zur Oberfläche der porösen
Scheidewand (2) unter einem Winkel von 20 bis 40°
geneigt sind.

3. Elektrolyseur zur Wasserenthärtung nach Anspruch 2, dadurch g e k e n n z e i c h n e t , dass in Körper der Vorsprünge (9) durchgehende Öffnungen (10) ausgeführt sind, deren Achsen rechtwinklig zur Oberfläche der porösen Scheidewand (2) verlaufen.

FIG. 1

FIG. 2

FIG. 3

FIG. 4

# INTERNATIONAL SEARCH REPORT

International Application No PCT/SU 89/00124

## I. CLASSIFICATION OF SUBJECT MATTER (if several classification symbols apply, indicate all) *

According to International Patent Classification (IPC) or to both National Classification and IPC

IPC$^4$ C 02 F 1/461

## II. FIELDS SEARCHED

| Minimum Documentation Searched [7] | |
|---|---|
| Classification System | Classification Symbols |
| IPC$^4$ | C 02 F 1/46 |

| Documentation Searched other than Minimum Documentation<br>to the Extent that such Documents are Included in the Fields Searched [8] |
|---|
| |

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | SU, A1, 381613 (Tsentralny nauchnoissledovatelsky institut olovyannoi promyshlennosti), 13 August 1973 (13.08.73), column 1, lines 11-23, the claims | 1 |
| A | SU, A1, 874655 (V.M. Zaitsev), 23 October 1981 (23.10.81), column 3, lines 15-22, the drawing | 1 |
| A | Zh. Khimia i tekhnologia vody, tom 7, No. 5, 1985, "Naukova dumka" (Kiev), pages 41-43, B.V. Pismenny et al. "Electrokhimicheskoe vydelenie smeshannogo kollektora" | 1 |
| A | SU, A1, 548316 (M.G. Granovsky et al.), 28 March 1977, column 3, lines 5-20, the drawing | 2,3 |
| A | SU, A1, 882944 (Ukrainsky institut inzhenerov vodnogo khozyaistva), 23 November 1981 (23.11.81) the claims, the drawing (cited in the description) | 2,3 |
| A | SU, A1, 1353742 (Sterlitamakskoe proizvodstvennoe obiedinenie "Kaustik"), 23 November 1987 (23.11.87) column 1, lines 25-40 | 2,3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 25 August 1989 (25.08.89) | 4 September 1989 (04.09.89) |
| International Searching Authority<br>ISA/SU | Signature of Authorized Officer |

Form PCT/ISA/210 (second sheet) (January 1985)